# EUROPEAN PATENT APPLICATION

(11) **EP 4 742 787 A1**
(43) Date of publication of application: **13.05.2026**
(21) Application number: 23944996.0
(22) Date of filing: 07.07.2023
(51) Int. Cl.: H04W 72/044, H04W 72/21

(54) **TERMINAL, WIRELESS COMMUNICATION METHOD, AND BASE STATION**

(71) Applicant: NTT DOCOMO, INC., Tokyo 100-6150 (JP)
(72) Inventor: OKANO, Mayuko, Tokyo 100-6150 (JP); SHIBAIKE, Naoya, Tokyo 100-6150 (JP); ECHIGO, Haruhi, Tokyo 100-6150 (JP)
(74) Representative: Hoffmann Eitle
(86) International application number: PCT/JP2023/025235
(87) International publication number: WO 2025/013112

(57) **Abstract**

A terminal according to one aspect of the present disclosure includes a control section that generates a sequence based on a value of uplink data, and a transmitting section that transmits the sequence in an uplink channel without a demodulation reference signal.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel-18 NR or later versions), improvement of uplink (UL) performance is under study. Meanwhile, studies have not sufficiently been made on UL data coverage expansion and overhead reduction. Unless UL data transmission is performed appropriately, deterioration of throughput and communication quality may occur.

Thus, an object of the present disclosure is to provide a terminal, a radio communication method, and a base station that improve performance of UL data transmission.

### Solution to Problem

A terminal according to one aspect of the present disclosure includes a control section that generates a sequence based on a value of uplink data, and a transmitting section that transmits the sequence in an uplink channel without a demodulation reference signal.

### Advantageous Effects of Invention

According to one aspect of the present disclosure, it is possible to improve performance of UL data transmission.

### Brief Description of Drawings

[FIG. 1] FIG. 1A to FIG. 1E are diagrams to show examples of PUCCH formats.
[FIG. 2] FIG. 2 is a diagram to show an example of PF 0.
[FIG. 3] FIG. 3A to FIG. 3C are diagrams to show examples of a DMRS-based PUCCH and a sequence-based PUCCH.
[FIG. 4] FIG. 4A to FIG. 4C show examples of association between a base sequence and transmitted information.
[FIG. 5] FIG. 5A to FIG. 5C show examples of association between CS offsets and transmitted information.
[FIG. 6] FIG. 6A to FIG. 6C show examples of association between a spreading code and transmitted information.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (PUCCH Format)

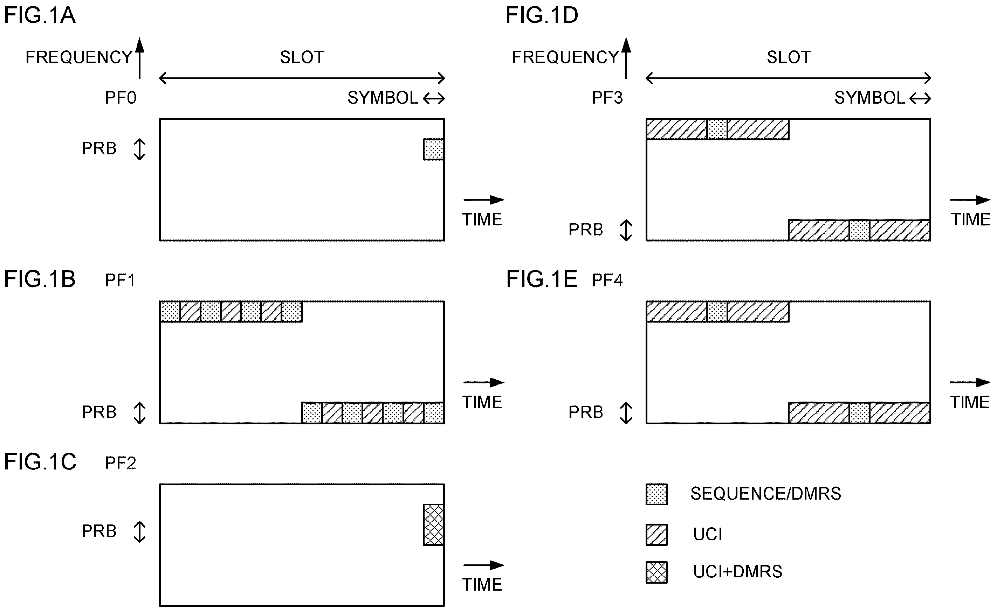

In NR, a configuration for uplink control channel (for example, PUCCH) (also referred to as a format, a PUCCH format (PF), or the like) is used for transmission of uplink control information (UCI). For example, Rel-15 NR supports PF 0 to PF 4 as shown in FIG. 1A to FIG. 1E, respectively. Note that, in Rel. 17 or later versions, the terms of PFs to be described below are merely examples and different terms may be used.

For example, PFs 0 and 1 are PFs used to transmit UCI with 2 or less bits (up to 2 bits). For example, the UCI may be at least one of delivery confirmation information (also referred to as Hybrid Automatic Repeat reQuest-Acknowledgement (HARQ-ACK), acknowledgement (ACK), negative-acknowledgement (NACK), or the like) and a scheduling request (SR). PF 0 can be allocated to 1 or 2 symbols, and thus is also referred to as a short PUCCH. On the other hand, PF 1 can be allocated to 4 to 14 symbols, and thus is also referred to as a long PUCCH or the like. PF 0 uses a cyclic shift (CS) depending on a value of the UCI to transmit a sequence obtained by a cyclic shift of a base sequence, and thus is also referred to as a sequence-based PUCCH. In PF 1, a plurality of user terminals may be code-division multiplexed (CDMed) in the same physical resource block (PRB) by time-domain block-wise spreading using at least one of a CS and a time domain (TD)-orthogonal cover code (OCC). PFs 0 and 1 may be mapped to 1 PRB.

PFs 2 to 4 are PFs used to transmit UCI (for example, channel state information (CSI) or at least one of a CSI, a HARQ-ACK, and an SR) with more than 2 bits. PF 2 can be allocated to 1 or 2 symbols, and thus is also referred to as a short PUCCH or the like. On the other hand, each of PFs 3 and 4 can be allocated to 4 to 14 symbols, and thus is also referred to as a long PUCCH or the like. In PF 4, a plurality of user terminals may be CDMed by using block-wise spreading before DFT (with a frequency domain (FD)-OCC). PFs 2 and 3 may be mapped to 1 to 16 PRBs. PF 4 may be mapped to 1 PRB.

Each of PFs 1 to 4 transmits UCI and a DMRS in a resource block allocated to a PUCCH, and thus is also referred to as a DMRS-based PUCCH. In each of PFs 1, 3, and 4, UCI and a DMRS are time-division multiplexed (TDMed) with each other. In PF 2, a DMRS is mapped for each 3 subcarriers, and UCI and a DMRS are frequency-division multiplexed (FDMed) with each other.

Intra-slot frequency hopping may be applied to PF 1, PF 3, and PF 4. Assuming that the length of the PUCCH is N_{symb}, the length before frequency hopping (first hop) may be floor(N_{sym}/2), and the length after frequency hopping (second hop) may be ceil(N_{symb}/2).

Waveforms of PF 0, PF 1, and PF 2 may be Cyclic Prefix (CP)-Orthogonal Frequency Division Multiplexing (OFDM). Waveforms of PF 3 and PF 4 may be Discrete Fourier Transform (DFT)-spread(s)-OFDM.

Allocation of a resource (for example, a PUCCH resource) used for transmission of the uplink control channel is performed by using higher layer signaling and/or downlink control information (DCI).

Specifically, the UE is notified of (configured with) one or more sets (PUCCH resource sets) each including one or more PUCCH resources via higher layer signaling. For example, a user terminal may be notified of K (for example, 1 ≤ K ≤ 4) PUCCH resource sets from a network (for example, a base station). Each PUCCH resource set may include M (for example, 1 ≤ M ≤ 32) PUCCH resources.

The UE may determine a single PUCCH resource set (first PUCCH resource set), from among the K configured PUCCH resource sets, based on a payload size of UCI (UCI payload size, the number of UCI information bits). The UCI payload size may be the number of bits of UCI not including a cyclic redundancy check (CRC) bit.

The UE may determine a PUCCH resource used to transmit the UCI, from among M PUCCH resources included in the determined PUCCH resource set, based on at least one of DCI and implicit information (also referred to as implicit indication information, an implicit index, or the like). For example, the implicit indication information may be a top CCE index of reception of a PDCCH for delivering the DCI.

Each PUCCH resource configured to the UE may include a value of at least one parameter (also referred to as field, information, or the like) of the following. Note that a range of a possible value for each parameter may be defined for each PUCCH format.
- A symbol (start symbol) in which allocation of the PUCCH is started
- The number of symbols allocated to the PUCCH (period allocated to the PUCCH) in a slot
- An index of a resource block (physical resource block (PRB)) in which allocation of the PUCCH is started
- The number of PRBs allocated to the PUCCH
- Whether frequency hopping is enabled for the PUCCH
- Indices of a frequency resource and an initial cyclic shift (CS) for the second hop in case of enabled frequency hopping
- An index of an orthogonal cover code (OCC) in the time domain, the length of an OCC (also referred to as an OCC length, a spread rate, or the like) used for block-wise spreading before discrete Fourier transform (DFT)
- An index of an OCC used for block-wise spreading after DFT

A low-power to average power ratio (low-PAPR) sequence is used for UCI of PF 0/PF 1 and a DMRS of PF 1/PF 3/PF 4. A pseudo-random sequence (Gold sequence) is used for a DMRS of PF 2.

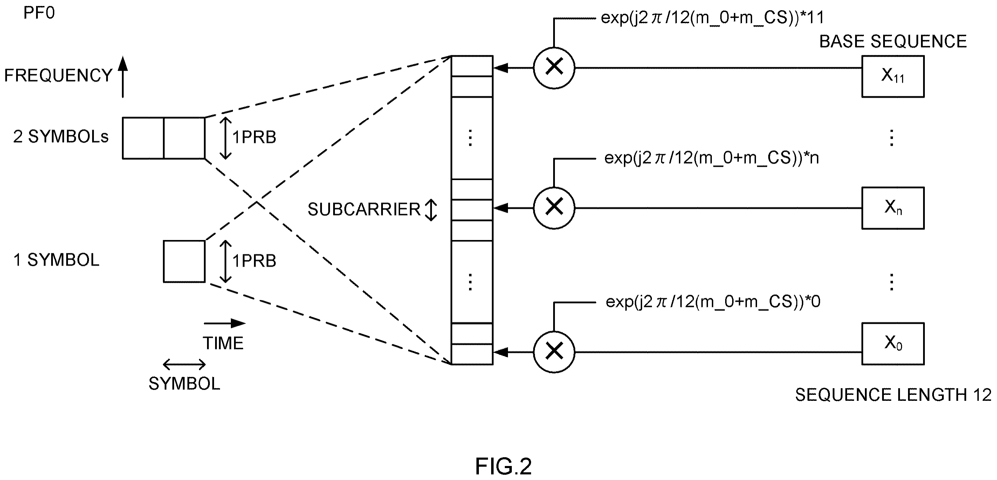

As shown in FIG. 2, the UE maps, for PF 0, a sequence obtained by applying cyclic shifts to elements X₀, ..., X₁₁ of a base sequence to 1 PRB (12 subcarriers) by using a cyclic shift (phase rotation) based on an initial cyclic shift index m₀ and a cyclic shift offset (sequence cyclic shift) m_{CS} depending on/corresponding to a value of UCI (at least one of a HARQ-ACK and an SR). The initial cyclic shift index may be configured by using higher layer signaling.

Association (table) between 1/2-bit HARQ-ACK information and a cyclic shift offset to the initial cyclic shift index is defined by a specification. Association (table) between the 1/2-bit HARQ-ACK information and a positive SR, and a cyclic shift offset to the initial cyclic shift index is defined by a specification. Association (table) between the 1/2 bit HARQ-ACK information and a negative SR, and a cyclic shift offset to the initial cyclic shift index is the same as the association (table) between 1/2-bit HARQ-ACK information and a cyclic shift offset to the initial cyclic shift index. For example, values {0, 1} of the 1-bit HARQ-ACK information correspond to cyclic shift offsets 0, 6, respectively. For example, values {00, 01, 11, 10} of the 2-bit HARQ-ACK information correspond to cyclic shift offsets 0, 3, 6, 9, respectively.

Rel. 15 defines, as a low-Peak to Average Power Ratio (PAPR) sequence, a constant amplitude zero auto-correlation (CAZAC) sequence (Zadoff-Chu (ZC) sequence) for a length longer than or equal to 36. For the length shorter than 36, a computer generated sequence (CGS) with consideration of a PAPR and cross-correlation is defined. The CAZAC sequence with the length of a prime number achieves an ideal PAPR (that is, PAPR = 1), otherwise the PAPR deteriorates.

### (DMRS-Based PUCCH and Sequence-Based PUCCH)

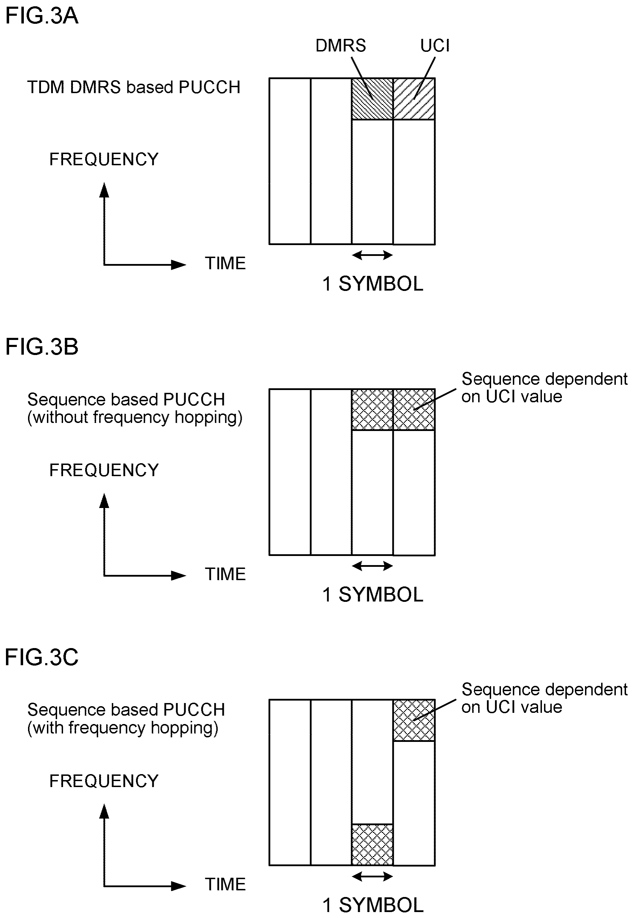

FIG. 3A shows an example of a PUCCH using DMRS-based transmission (transmission including a DMRS in a channel). In this example, over 1 PRB and 2 symbols allocated to the PUCCH, UCI and a DMRS are transmitted and TDMed. FIGS. 3B and 3C show examples of a PUCCH using sequence-based transmission (transmission not including a DMRS in a channel). In this example, over 1 PRB and 2 symbols allocated to the PUCCH, a sequence dependent on a UCI value is transmitted, and a DMRS is not transmitted. FIG. 3B and FIG. 3C show a case where frequency hopping is not performed and a case where frequency hopping is performed, respectively.

Performance (coverage/link budget) of a PUSCH/PUCCH using sequence-based transmission is higher than performance of the PUSCH/PUCCH using DMRS-based transmission. This is because the sequence-based transmission uses all of the transmission energy to transmit information, while the DMRS-based transmission uses part of the transmission energy to transmit a DMRS.

In Rel-15 NR, a UE can use sequence-based transmission (PUCCH format (PF) 0) to transmit up to 2-bit UCI including a HARQ-ACK and a positive SR/negative SR at maximum, and uses DMRS-based transmission to transmit more than 2 bit-UCI. Among short PUCCHs, a peak to average power ratio (PAPR) of PF 2 using OFDM-based (OFDM waveform) transmission is higher than a PAPR of PF 0 using a constant amplitude zero auto-correlation (CAZAC) sequence, and thus the performance of PF 2 is lower than that of PF 0.

### (Analysis)

As 6G element technologies, ultra-coverage expansion, such as a non-terrestrial network (NTN), is under study. In view of diversification of terminals, such as internet of things (IoT), ambient IoT, and extended/cross reality (XR), and further utilization of high frequency bands, it is expected that UL coverage expansion technologies are particularly required. IoT may be, for example, sensors, wearable devices, smart grids, and the like. Ambient IoT may be, for example, a tag and the like. XR may be, for example, virtual reality (VR), augmented reality (AR), mixed reality (MR), substitutional reality (SR), and the like. Examples of the UL coverage expansion technologies include early data transmission (EDT) in LTE and small data transmission (SDT) in NR for IoT, and the like, for example.

Depending on a type of terminal and a use case, it is considered that a payload of UL transmission is sufficiently small. When the payload of the UL transmission is sufficiently small, it is considered that the conventional UL data transmission procedure has large overhead.

As described above, studies have not sufficiently been made on a method for UL coverage expansion and overhead reduction in UL data transmission. Unless such a method is sufficiently studied, degradation in throughput/communication quality may be caused.

Thus, the inventors of the present invention came up with the idea of a method for UL coverage expansion and overhead reduction in UL data transmission.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, UL data, a UL information bit, a UL information bit string, user data, a UL-shared channel (SCH), a transport block (TB), and a code word (CW) may be interchangeably interpreted. In the present disclosure, a type of information, a field, and an information element may be interchangeably interpreted.

In the present disclosure, a resource block (RB), a physical RB (PRB), and a virtual RB (VRB) may be interchangeably interpreted.

### (Radio Communication Method)

### <Embodiment 1>

This embodiment relates to a method for sequence-based UL data transmission. The sequence-based UL data transmission may follow at least one of some embodiments 1-x below.

### <<Embodiment 1-1>>

In sequence-based UL data transmission, UL data (one or more UL information bits) transformed into a sequence may be defined as uplink control information (UCI). The UL data may be multiplexed with existing UCI, such as HARQ-ACK/SR/CSI, on a UL channel.

### <<Embodiment 1-2>>

Sequence-based UL data transmission may be defined as PUSCH transmission, as PUCCH transmission, or as another UL channel or UL signal. The UL channel may be a new UL channel or an existing UL channel, such as a PRACH. The UL signal may be a new UL signal, a new UL RS, or an existing UL signal, such as SRS.

### <<Embodiment 1-3>>

Sequence-based UL data transmission may be transmitted by a UE, by an IAB MT, or by a relay apparatus. The relay apparatus may be a network-controlled repeater (NCR), a reconfigurable intelligent surface (RIS), or the like, or may be a communication satellite or an earth station in a very small aperture terminal (VSAT) system.

### <<Embodiment 1-4>>

Sequence-based UL data transmission may be supported only in a specific UE state. The specific UE state may be RRC_IDLE, RRC_INACTIVE, a state other than RRC_CONNECTED, or RRC_CONNECTED.

### <<Embodiment 1-5>>

A type/field/information element of UL data (transmitted information) transmitted by sequence-based UL data transmission may be indication of ON/OFF of specific signal transmission, measurement/estimation information related to mobility/beam management/positioning/sensing/interference detection, information related to UE capability/information, information reporting successful detection/reception/decoding of indication/notification from a base station, or other information.

For example, for the indication of ON/OFF of the specific signal transmission, the specific signal may be a synchronization signal/broadcast information or a reference signal for measurement/estimation related to mobility/beam management/positioning/sensing/interference detection. For reporting of the measurement/estimation information related to mobility/beam management/positioning/sensing/interference, a threshold for a measured value related to the reporting may be defined by a specification or may be configured by higher layer signaling. The UE may perform the sequence-based UL data transmission for the reporting, depending on this configuration. For the information reporting successful detection/reception/decoding of indication/notification from the base station, the indication/notification from the base station may be indication related to activation/wake-up of a specific node/circuit or notification confirming camping.

### <<Embodiment 1-6>>

A waveform of sequence-based UL data transmission may be at least one of OFDM (CP-OFDM, disabling of a transform precoder), DFT-s-OFDM (enabling of a transform precoder), and a sensing signal waveform, or may be another waveform. The sensing signal waveform may be, for example, a pre-chirp waveform.

### <<Embodiment 1-7>>

As a base sequence for sequence-based UL data transmission, at least one type among a pseudo-random sequence, a low-PAPR sequence, or a sequence defined in a table of a specification may be used. For example, the pseudo-random sequence may be a Gold sequence or may be based on an m sequence. The low-PAPR sequence may be a Zadoff-Chu (ZC) sequence. The sequence defined in the table of the specification may be a computer generated sequence (CGS).

A type of the base sequence corresponding to a sequence length to be transmitted may be defined by a specification. For example, the base sequence when the sequence length is less than/less than or equal to X may be a CGS, and the base sequence when the sequence length is greater than or equal to/exceeds X may be a ZC sequence.

A type of the base sequence corresponding to a payload size of UL data to be transmitted may be defined by a specification. For example, the base sequence when the payload size of the UL data is less than/less than or equal to X bits may be a CGS, and the base sequence when the payload size of the UL data is greater than or equal to/exceeds X bits may be a ZC sequence.

The type of the base sequence may be defined by a specification, or may be configured/indicated semi-statically/dynamically.

In the sequence-based UL data transmission, a sequence obtained by a cyclic shift of the base sequence may be transmitted.

In the sequence-based UL data transmission, a sequence obtained by multiplying the base sequence by a spreading code may be transmitted.

### <<Embodiment 1-8>>

A sequence for sequence-based UL data transmission may depend on a type/value (code point) of UL data (transmitted information). In the sequence-based UL data transmission, different sequences may be generated/transmitted for a plurality of types/values of UL data (transmitted information).

### <<<Base Sequence>>>

The type/value of the UL data (transmitted information) may correspond to/depend on a type of a base sequence or the base sequence. A type of a base sequence or the base sequence may differ for the plurality of types/values of the UL data. The type of the base sequence may follow Embodiment 1-7. A sequence transmitted in the sequence-based UL data transmission may be generated by operation to the base sequence.

Association between a type of the UL data and the base sequence may be defined by a specification (for example, a table), or may be configured/indicated by an SIB/RRC IE/MAC CE/DCI. The base sequence may be specified by at least one of a base sequence index, a group number, and a base sequence number, or may be specified by an offset (base sequence offset) to at least one of a group number and a base sequence number.

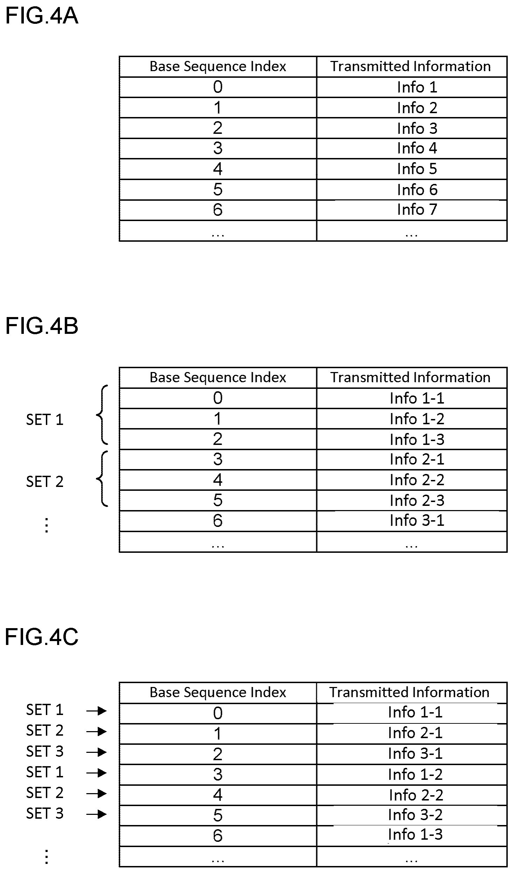

As shown in an example of FIG. 4A, association between base sequence indices (0, 1, 2, ...) and values of transmitted information (Info 1, 2, 3, ...) may be defined/configured/indicated.

A set of base sequences may be defined by a specification (for example, a table), or may be configured/indicated by an SIB/RRC IE/MAC CE/DCI. In the set, a base sequence corresponding to a type/value of UL data (transmitted information) may be defined by a specification (for example, a table) or may be configured/indicated by an SIB/RRC IE/MAC CE/DCI.

The set of base sequences may be associated with a cell ID, with a type of transmitted information, or with a UE. The type of the transmitted information may follow Embodiment 1-5. A plurality of base sequences in one set may be associated with a plurality of respective values of transmitted information.

A base sequence of the set to be used for sequence generation may be randomly determined by the UE, or may be determined based on a time resource for the sequence-based UL data transmission (base sequence hopping). The time resource may be represented by at least one of a system frame number (SFN), a slot index, and a symbol index. According to such base sequence hopping for changing a base sequence depending on a time resource, interference with another cell/UE can be suppressed.

In an example of association between base sequence indices and values of transmitted information in FIG. 4B, sets 1, 2, ... of base sequence indices are defined. One set may be associated with one type of transmitted information. A plurality of base sequence indices in one set may be associated with a plurality of respective values of transmitted information. One set may include a plurality of consecutive base sequence indices, and the subsequent set may include a plurality of subsequent consecutive base sequence indices (sequential mapping). This mapping enables a base sequence to be effectively associated with a value of transmitted information even when the number of values differs for each type of transmitted information.

In an example of association between base sequence indices and values of transmitted information in FIG. 4C, sets 1, 2, ... of base sequence indices are defined. One set may be associated with one type of transmitted information. A plurality of base sequence indices in one set may be associated with a plurality of respective values of transmitted information. A plurality of consecutive base sequence indices may be associated with a plurality of different sets, and one of the sets may include a plurality of non-consecutive base sequence indices (cyclic mapping). This mapping can suppress interference with another cell/UE in a case where cross-correlation between two adjacent base sequences is higher than cross-correlation between two non-adjacent base sequences.

### <<<Cyclic Shift>>>

A type/value of UL data (transmitted information) may correspond to a cyclic shift. The CS may be represented by at least one of a phase rotation amount (for example, α), an initial CS index (for example, m₀), and a CS offset (for example, m_{CS}). The CS offset may differ for a plurality of types/values of the UL data. A sequence transmitted in the sequence-based UL data transmission may be generated by applying a CS offset to a base sequence.

Association between a type of the UL data and the CS offset may be defined by a specification (for example, a table), or may be configured/indicated by an SIB/RRC IE/MAC CE/DCI. A CS to be applied to the base sequence may be determined based on addition of the initial CS index and a CS offset, or may be specified by a CS index. A value (phase rotation amount) α of the CS may be based on 2πi/N mod N for an initial CS index/CS offset/CS index value i. Here, N may be the length of the base sequence, the number of REs (subcarriers) (for example, 12) in 1 PRB, or a number defined by a specification.

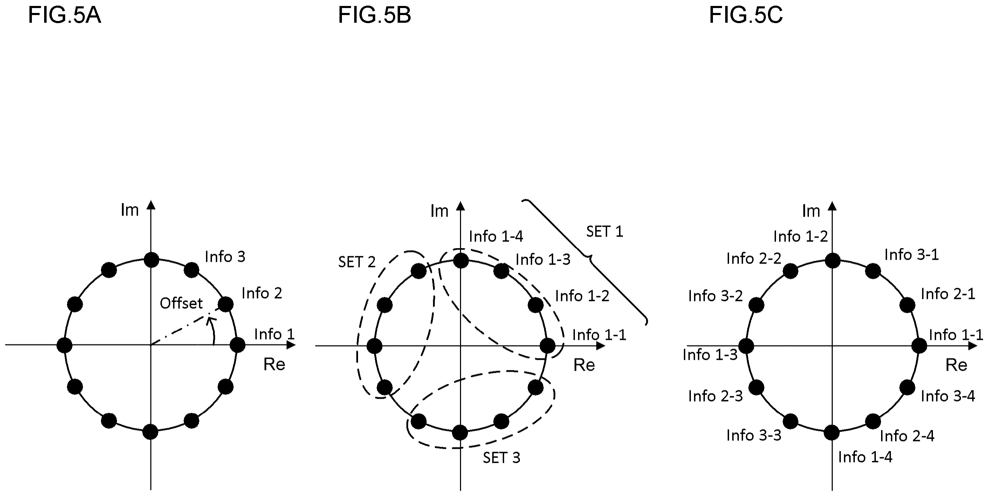

As shown in an example of FIG. 5A, association between CS offsets and values of transmitted information (Info 1, 2, ...) may be defined/configured/indicated.

A set of CS offsets may be defined by a specification (for example, a table), or may be configured/indicated by an SIB/RRC IE/MAC CE/DCI. In the set, a CS offset corresponding to a type/value of UL data (transmitted information) may be defined by a specification (for example, a table), or may be configured/indicated by an SIB/RRC IE/MAC CE/DCI.

The set of CS offsets may be associated with a cell ID, with a type of transmitted information, or with a UE. The type of the transmitted information may follow Embodiment 1-5. A plurality of CS offsets in one set may be associated with a plurality of respective values of transmitted information.

A CS offset of the set to be used for sequence generation may be randomly determined by the UE, or may be determined based on a time resource for the sequence-based UL data transmission (CS hopping). The time resource may be represented by at least one of a system frame number (SFN), a slot index, and a symbol index. According to such CS hopping for changing a CS offset depending on a time resource, interference with another cell/UE can be suppressed.

In an example of association between CS offset indices and values of transmitted information in FIG. 5B, sets 1, 2, ... of CS offset indices are defined. One set may be associated with one type of transmitted information. CS offset indices in one set may be associated with a plurality of respective values of transmitted information of one type. One set may include a plurality of consecutive CS offset indices, and the subsequent set may include a plurality of subsequent consecutive CS offset indices (sequential mapping). A difference between two CS offsets over sets is configured to be large, thereby enabling interference between a plurality of sets to be suppressed. This mapping enables a CS offset to be effectively associated with a value of transmitted information even when the number of values differs for each type of transmitted information.

In an example of association between CS offset indices and values of transmitted information in FIG. 5C, sets 1, 2, ... of CS offset indices are defined. One set may be associated with one type of transmitted information. A plurality of CS offset indices in one set may be associated with a plurality of respective values of transmitted information of one type. A plurality of consecutive CS offset indices may be associated with a plurality of different sets, and one of the sets may include a plurality of non-consecutive CS offset indices (cyclic mapping). A difference between two CS offsets in a set is configured to be large, thereby enabling an error in another value corresponding to the same set to be suppressed.

### <<<Spreading Code>>>

A type/value of UL data (transmitted information) may correspond to a spreading code. A spreading code may differ for a plurality of types/values of the UL data. A sequence transmitted in the sequence-based UL data transmission may be generated by applying a spreading code to a base sequence. The spreading code may be an orthogonal cover code (OCC). The OCC may be at least one of a time domain (TD)-OCC and a frequency domain (FD)-OCC.

Association between a type of the UL data and the spreading code may be defined by a specification (for example, a table), or may be configured/indicated by an SIB/RRC IE/MAC CE/DCI.

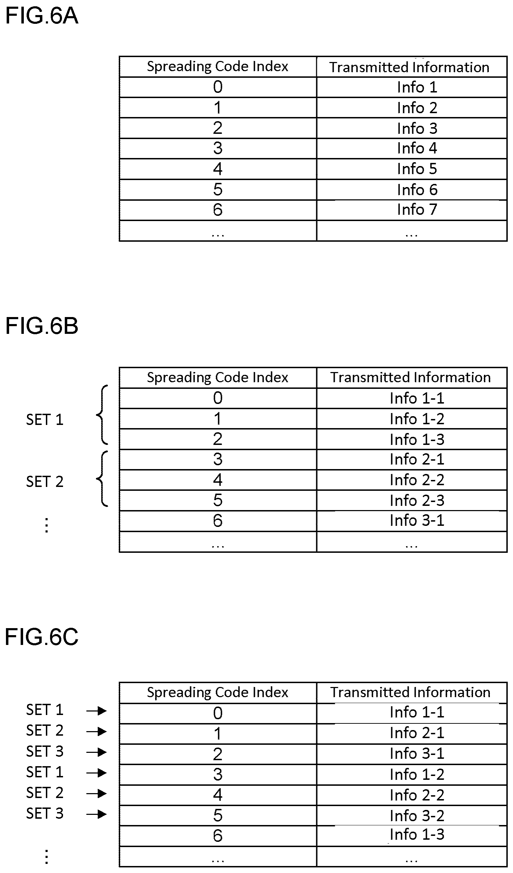

As shown in an example of FIG. 6A, association between spreading code indices (for example, OCC indices) and values of transmitted information (Info 1, 2, ...) may be defined/configured/indicated.

A set of spreading codes may be defined by a specification (for example, a table), or may be configured/indicated by an SIB/RRC IE/MAC CE/DCI. In the set, a spreading code corresponding to a type/value of UL data (transmitted information) may be defined by a specification (for example, a table), or may be configured/indicated by an SIB/RRC IE/MAC CE/DCI.

The set of spreading codes may be associated with a cell ID, with a type of transmitted information, or with a UE. The type of the transmitted information may follow Embodiment 1-5. A plurality of spreading codes in one set may be associated with a plurality of respective values of transmitted information.

A spreading code of the set to be used for sequence generation may be randomly determined by the UE, or may be determined based on a time resource for the sequence-based UL data transmission (CS hopping). The time resource may be represented by at least one of a system frame number (SFN), a slot index, and a symbol index. According to such spreading code hopping for changing a spreading code depending on a time resource, interference with another cell/UE can be suppressed.

In an example of association between spreading code indices and values of transmitted information in FIG. 6B, sets 1, 2, ... of spreading code indices are defined. One set may be associated with one type of transmitted information. Spreading code indices in one set may be associated with a plurality of respective values of transmitted information of one type. One set may include a plurality of consecutive spreading code indices, and the subsequent set may include a plurality of subsequent consecutive spreading code indices (sequential mapping). This mapping enables a spreading code to be effectively associated with a value of transmitted information even when the number of values differs for each type of transmitted information.

In an example of association between spreading code indices and values of transmitted information in FIG. 6C, sets 1, 2, ... of spreading code indices are defined. One set may be associated with one type of transmitted information. A plurality of spreading code indices in one set may be associated with a plurality of respective values of transmitted information of one type. A plurality of consecutive spreading code indices may be associated with a plurality of different sets, and one of the sets may include a plurality of non-consecutive spreading code indices (cyclic mapping). This mapping can suppress interference with another cell/UE in a case where cross-correlation between two adjacent spreading codes is higher than cross-correlation between two non-adjacent spreading codes.

### <<Embodiment 1-9>>

Sequence-based UL data transmission may be multiplexed with sequence-based UL data transmission from another UE (user multiplexing). The user multiplexing may follow at least one of some configurations/indications below.
- An SIB/RRC IE/MAC CE/DCI may configure/indicate a UE-specific base sequence index (that differs depending on each UE).
- The SIB/RRC IE/MAC CE/DCI may configure/indicate a UE-specific CS offset index/initial CS index (that differs for each UE).
- The SIB/RRC IE/MAC CE/DCI may configure/indicate a UE-specific time resource (that differs for each UE).
- The SIB/RRC IE/MAC CE/DCI may configure/indicate a UE-specific frequency resource (that differs for each UE).
- The SIB/RRC IE/MAC CE/DCI may configure/indicate a UE-specific spreading code (that differs for each UE).

### <<Variations>>

The sequence-based UL data transmission may be applied to sidelink/DL (sequence-based sidelink (SL) data transmission/sequence-based DL data transmission). UL in each embodiment may be interpreted as SL or DL.

The sequence-based UL data transmission may be applied to a terrestrial network (TN) or an NTN.

The sequence-based UL data transmission may also be used for measurement/estimation, such as sensing/sounding/channel estimation. The sequence-based UL data transmission may, when being used for sounding, be a substitute for an SRS. The sequence-based UL data transmission may, when being used for channel estimation, be a substitute for a DMRS. A sequence for the sequence-based UL data transmission may be based on a low-PAPR sequence similar to that for an SRS/DMRS (for PUSCH/PUCCH format 1/3/4), or may be a pseudo-random sequence similar to that for a DMRS (for PUCCH format 2). According to this measurement/estimation, sequence-based UL data transmission can be used for both UL data transmission and measurement/estimation.

A band (broadband) for the measurement may be divided into N (N > 1) partial bands (narrowbands). The sequence-based UL data transmission may perform frequency hopping using M (N ≥ 1) × N hops. According to this frequency hopping, a base station can obtain a result of measurement/estimation at a broadband even when a bandwidth of sequence-based UL data transmission is restricted. Bands with a plurality of hops may or may not be contiguous.

The base station may receive a sequence in a resource for sequence-based UL data transmission, and may judge a type/value of UL data, based on the sequence. The type/value of the UL data may be judged by using maximum likelihood detection or the like.

According to this embodiment, it is possible to expand UL data transmission coverage and to reduce overhead.

### <Embodiment 2>

This embodiment relates to a method of configuring/indicating a resource for sequence-based UL data transmission. Configuration/indication of the resource for sequence-based UL data transmission may follow at least one of some embodiments 2-x below.

### <<Embodiment 2-1>>

A time resource for sequence-based UL data transmission may be defined by a specification, or may be configured/indicated semi-statically/dynamically. The time resource (time operation, time behavior) for sequence-based UL data transmission may be a periodic/semi-persistent/aperiodic time resource.

At least one of some parameters below for the time resource for sequence-based UL data transmission may be defined by a specification, or may be configured/indicated by an SIB/RRC IE/MAC CE/DCI.
- A periodicity of the time resource.
- A start symbol of the time resource. This may be a start symbol in a slot.
- A time offset. This may be a time between the DCI and the sequence-based UL data transmission, or may be a time between a last symbol for reception of the DCI and a start symbol for the sequence-based UL data transmission.
- The number of slots/symbols in the time resource. The number may be the number of consecutive slots/symbols. The number may be referred to as duration.
- Bitmap indication per time unit. The position of each bit in the bitmap may correspond to a time resource of one time unit. Values "1" and "0" of the bit may indicate that a sequence is mapped to the corresponding time resource and that the sequence is not mapped to the corresponding time resource, respectively. The time unit may be a symbol/subslot/slot/subframe.

A plurality of time resources (candidates) for sequence-based UL data transmission may be defined by a specification, or may be configured. The UE may determine which time resource of the plurality of time resources is to be used for the sequence-based UL data transmission. The UE may determine the time resource (transmission timing), depending on indication from a higher layer. The indication from the higher layer may be occurrence of UL data. The plurality of time resources may be periodic, and activation/release (MAC CE/DCI/command) of the plurality of time resources may be indicated. While the plurality of time resources are activated, the UE may perform sequence-based UL data transmission, in one time resource of the plurality of time resources, depending on a timing of occurrence of UL data. This sequence-based UL data transmission may not be scheduled by a dynamic grant. A plurality of periodic time resources are applied in such a manner, thereby enabling overhead for UL data transmission to be suppressed and enabling latency for UL data transmission to be suppressed.

The sequence-based UL data transmission may be triggered/scheduled by a MAC CE/DCI/command/synchronization signal/PBCH (for example, SS/PBCH block).

Repetition transmission (repetition) of sequence-based UL data transmission may be defined by a specification, or may be configured. A repetition factor (the number of repetitions) for sequence-based UL data transmission may be defined by a specification, or may be configured. The UE may perform sequence-based UL data transmission for the same UL data in each of time resources of the number of repetition factors. Repetition transmission is applied in such a manner, thereby enabling coverage to be expanded.

### <<Embodiment 2-2>>

At least one of some parameters below for a frequency resource for sequence-based UL data transmission may be defined by a specification, or may be configured/indicated by an SIB/RRC IE/MAC CE/DCI.
- A sequence length. The sequence length may correspond to the number of REs of the frequency resource.
- The number of REs/RBs/resource block groups (RBGs)/subbands of the frequency resource.
- An offset of an RE/RB/RBG/subband level for the frequency resource.
- A start RE/RB/RBG/subband of the frequency resource.
- The number of REs/RBs/RBGs/subbands in the frequency resource.
- Density per frequency unit. The frequency unit may be an RB/RBG/subband. The density may be density of a resource to which a sequence is mapped in the frequency resource.
- Bitmap indication per frequency unit. The position of each bit in the bitmap may correspond to a frequency resource of one frequency unit. Values "1" and "0" of the bit may indicate that a sequence is mapped to the corresponding frequency resource and that the sequence is not mapped to the corresponding frequency resource, respectively. The frequency unit may be an RE/RB/RBG/subband.
- Interleaved mapping. This may indicate enabling/disabling of interleaving from a VRB to a PRB, or may indicate an interleaver size.
- Enabling/disabling of frequency hopping. This may indicate intra-slot frequency hopping or inter-slot frequency hopping.
- An offset for frequency hopping. The offset is an offset between a frequency resource for a first hop (before frequency hopping) and a frequency resource for a second hop (after the frequency hopping), and may be represented by the number of REs/RBs/RBGs/subbands. In place of the offset for frequency hopping, the frequency resource for the second hop may be used.

A plurality of frequency resources (candidates) for the sequence-based UL data transmission may be defined by a specification, or may be configured. The UE may determine which frequency resource of the plurality of frequency resources is to be used for the sequence-based UL data transmission. The UE may determine the frequency resource, depending on indication from a higher layer, or may determine the frequency resource, based on a type/value of UL data. The one frequency resource to be determined may be a plurality of resources used for frequency hopping.

Repetition transmission (repetition) of the sequence-based UL data transmission may be defined by a specification, or may be configured. A repetition factor (the number of repetitions) for the sequence-based UL data transmission may be defined by a specification, or may be configured. The UE may perform sequence-based UL data transmission for the same UL data in each of frequency resources of the number of repetition factors. Repetition transmission is applied in such a manner, thereby enabling coverage to be expanded.

### <<Embodiment 2-3>>

At least one of some parameters below for a spatial domain for sequence-based UL data transmission may be defined by a specification, or may be configured/indicated by an SIB/RRC IE/MAC CE/DCI.
- A TCI state. This may be a TCI state/spatial relation for sequence-based UL data transmission or a unified TCI state applied to a plurality of types of channels/signals.
- A QCL resource RS ID. This may be included in a TCI state. This may be configured for each QCL type.
- A beam ID. Association between the beam ID and an RS ID to be referred to may be defined by a specification, or may be configured/indicated by an SIB/RRC IE/MAC CE/DCI.

### <<Embodiment 2-4>>

At least one of some parameters below for a power domain/power control for sequence-based UL data transmission may be defined by a specification, or may be configured/indicated by an SIB/RRC IE/MAC CE/DCI.
- A transmission power offset. This may be, for example, individual maximum power reduction (MPR) for sequence-based UL data transmission. For the MPR, a plurality of values depending on a plurality of conditions may be defined. The conditions may be frequency resources for sequence-based UL data transmission.
- A threshold for a DL measurement result related to determination of transmission power. The DL measurement result may be RSRP/RSRQ/SINR/SNR/RSSI.

At least one of a parameter for the power control and an equation for the transmission power may be defined/configured in common for sequence-based UL data transmission and existing DMRS-based UL data transmission, or may be defined/configured individually for each of the sequence-based UL data transmission and the existing DMRS-based UL data transmission.

The parameter for the power control for sequence-based UL data transmission may be configured individually for each type of UL data. The parameter for the power control for sequence-based UL data transmission may be configured individually for each type/category/service/network for a UE. The type/category/service/network for the UE may be whether the UE is a narrowband UE, reduced capability (RedCap), enhanced RedCap (eRedCap), IoT, industrial IoT (IIoT), enhanced IIoT (eIIoT), ultra-reliable and low latency communications (URLLC), enhanced, enhanced URLLC (eURLLC), mobile broadband (eMBB), a handheld UE, an IAB, an NCR, an RIS, a TN, an NTN, a relay apparatus, or the like. For example, a parameter for power control for sequence-based UL data transmission in a state other than RRC_CONNECTED (at least one of RRC_IDLE and RRC_INACTIVE) may be configured individually for whether the UE is a narrowband UE, may be configured individually for whether the UE is a handheld UE or an IAB/NCR/RIS, or may be configured individually for whether the network is a TN or an NTN.

According to this embodiment, a UE can appropriately determine a resource for sequence-based UL data transmission.

### <Embodiment 3>

This embodiment relates to UE capability signaling for sequence-based UL data transmission. The UE capability signaling related to sequence-based UL data transmission may follow at least one of some embodiments 3-x below.

### <<Embodiment 3-1>>

The UE capability signaling may include at least one of some UE capability parameters below.
- Supporting of sequence-based UL data transmission.
- A type of UL data possible to be transmitted by sequence-based UL data transmission. The type may follow Embodiment 1-5.
- A type/format of a sequence for sequence-based UL data transmission. The sequence may follow Embodiment 1-8.
- A user multiplexing scheme for sequence-based UL data transmission. The user multiplexing scheme may follow Embodiment 1-9.

### <<Embodiment 3-2>>

Each UE capability parameter may be reported per specific granularity. The specific granularity may be a UE/band/band combination (BC)/feature set (FS)/feature set per component carrier (FSPC)/carrier type. "Per FS" may be "per band per BC." "Per FSPC" may be "per CC per band per band combination." The carrier type may be at least one of FR, licensed and unlicensed, or TDD or FDD.

A specification may define that it is mandatory for a UE supporting a specific band to support sequence-based UL data transmission. A specification may define that it is mandatory for a UE of a specific type/category/service/network to support sequence-based UL data transmission. The specific type/category/service may be at least one of the type/category/service for the UE in Embodiment 2-4.

According to this embodiment, a UE can appropriately report a UE capability related to sequence-based UL data transmission.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific
   processing/operation/control/information for at least one of the embodiments above.
- the UE capability parameter of Embodiment 3-1.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19) or the like.

An RRC parameter for enabling operation XXX in Rel. YY (for example, YY is 18 or greater) may be represented as XXX_rYY (XXX-rYY).

When the UE does not support at least one of the specific UE capabilities above or is not configured with the specific information, operation of Rel. 15/16/17 may be applied, for example.

### (Supplementary Note)

Regarding one embodiment of the present disclosure, the following supplementary notes of the invention will be given.

### {Supplementary Note 1}

A terminal including:
a control section that generates a sequence based on a value of uplink data; and
a transmitting section that transmits the sequence in an uplink channel without a demodulation reference signal.

### {Supplementary Note 2}

The terminal according to supplementary note 1, wherein the transmitting section transmits the sequence in a state other than a radio resource control (RRC) connected state.

### {Supplementary Note 3}

The terminal according to supplementary note 1 or 2, wherein the transmitting section transmits the sequence in one of a plurality of resources arranged periodically.

### {Supplementary Note 4}

The terminal according to any one of supplementary notes 1 to 3, wherein transmission of the sequence involves frequency hopping.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

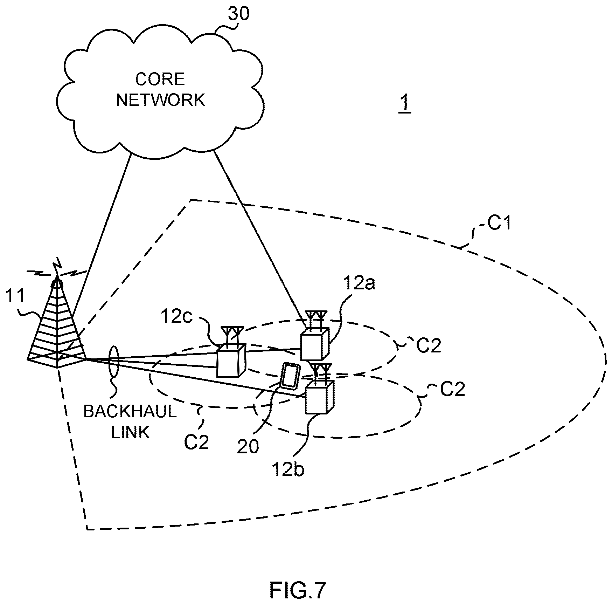

FIG. 7 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

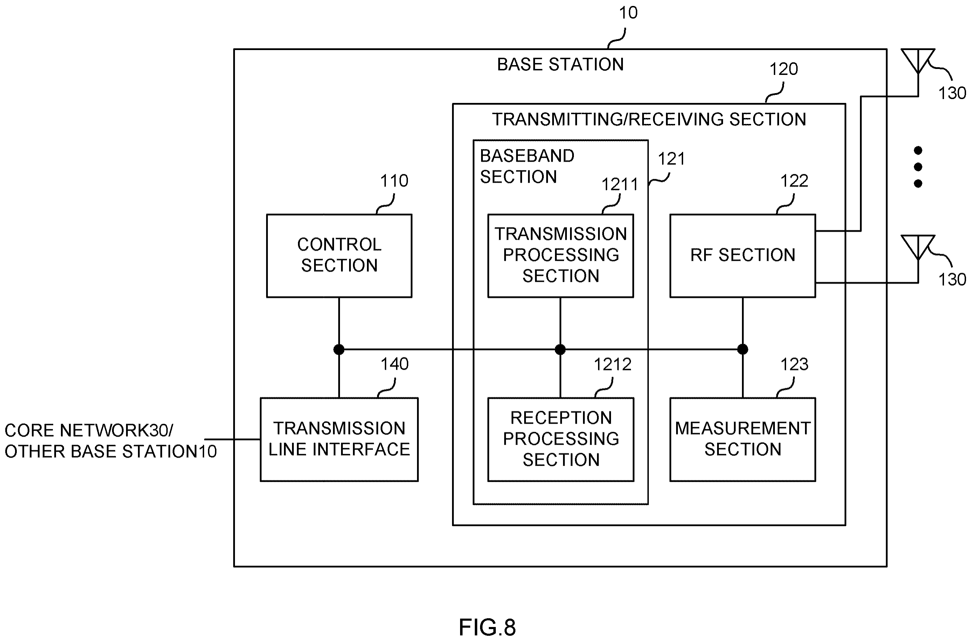

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive a sequence in an uplink channel without a demodulation reference signal. The control section 110 may judge a value of uplink data, based on the sequence.

### (User Terminal)

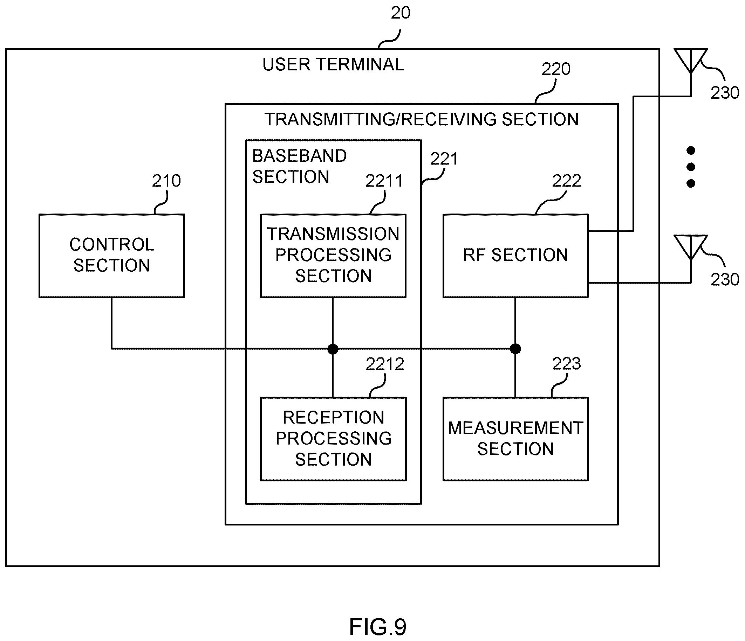

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The control section 210 may generate a sequence based on a value of uplink data. The transmitting/receiving section 220 may transmit the sequence in an uplink channel (for example, PUSCH, PUCCH) without a demodulation reference signal (for example, DMRS).

The transmitting/receiving section 220 may transmit the sequence in a state other than a radio resource control (RRC) connected state.

The transmitting/receiving section 220 may transmit the sequence in one of a plurality of resources arranged periodically.

Transmission of the sequence may involve frequency hopping.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

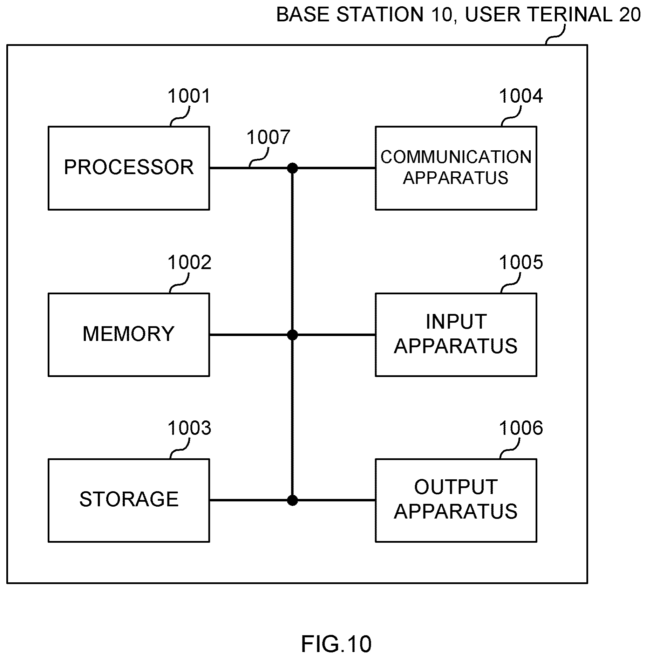

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

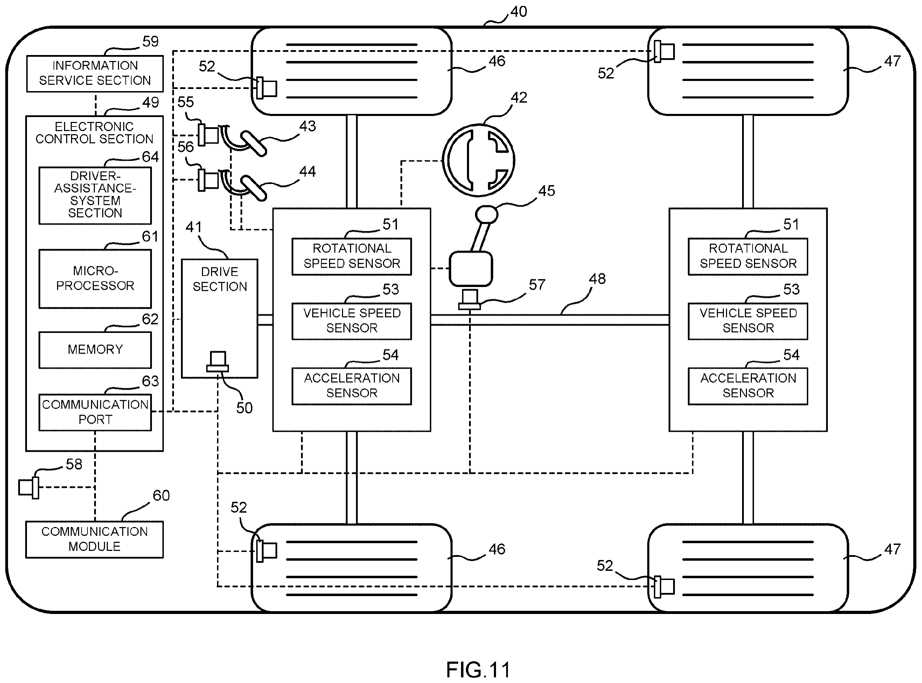

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that generates a sequence based on a value of uplink data; and
a transmitting section that transmits the sequence in an uplink channel without a demodulation reference signal.

2. The terminal according to claim 1, wherein
the transmitting section transmits the sequence in a state other than a radio resource control (RRC) connected state.

3. The terminal according to claim 1, wherein
the transmitting section transmits the sequence in one of a plurality of resources arranged periodically.

4. The terminal according to claim 1, wherein
transmission of the sequence involves frequency hopping.

5. A radio communication method for a terminal, the radio communication method comprising:
generating a sequence based on a value of uplink data; and
transmitting the sequence in an uplink channel without a demodulation reference signal.

6. A base station comprising:
a receiving section that receives a sequence in an uplink channel without a demodulation reference signal; and
a control section that judges a value of uplink data, based on the sequence.
